# EUROPÄISCHE PATENTSCHRIFT

(11) **EP 2 313 867 B1**
(45) Veröffentlichungstag und Bekanntmachung des Hinweises auf die Patenterteilung: **16.11.2011**
(21) Anmeldenummer: 09777253.7
(22) Anmeldetag: 10.07.2009
(51) Int. Cl.: G06T 17/30, B29C 33/38

(54) **VERFAHREN UND VORRICHTUNG ZUM HERSTELLEN EINES URFORMWERKZEUGS**
METHOD AND DEVICE FOR THE PRODUCTION OF A MASTER PATTERN TOOL
PROCÉDÉ ET DISPOSITIF POUR LA FABRICATION D'UN MOULE PRIMAIRE

(30) Priorität: 21.07.2008 DE 102008034117
(43) Veröffentlichungstag der Anmeldung: 27.04.2011
(73) Patentinhaber: Carl Zeiss Industrielle Messtechnik GmbH, 73447 Oberkochen (DE)
(72) Erfinder: LETTENBAUER, Hubert, 73457 Essingen (DE); MODRICH, Kai-Udo, 73655 Plüderhausen (DE)
(74) Vertreter: Obst, Bernhard
(86) Internationale Anmeldenummer: PCT/EP2009/005195
(87) Internationale Veröffentlichungsnummer: WO 2010/009840

(56) Entgegenhaltungen:
- EP-A1- 0 875 751
- Rainer Tutsch: "Fertigungsmesstechnik"; "Teil C" In: "Handbuch der Mess- und Automatisierungstechnik in der Produktion" 7. Juli 2006 (2006-07-07), Springer , Berlin Heidelberg , XP009122022 , Seiten 199-362 Seite 199 - Seite 201; Abbildungen 1.1, 1.2
- BRICK E -M; RUDOLPH H; ARNOLD J; LUTHARDT R G: "Analysis of three-dimensional sinter shrinkage of copings made from alumina in an innovative direct shaping process" COMPUTERIZED MEDICAL IMAGING AND GRAPHICS ELSEVIER UK, Bd. 28, Nr. 3, April 2004 (2004-04), Seiten 159-165, XP002543468 ISSN: 0895-6111

## Beschreibung

Die Erfindung betrifft ein Verfahren und eine Vorrichtung zum Herstellen eines Urformwerkzeugs.

Urformwerkzeuge werden in industriellen Herstellungsprozessen zum Herstellen von Bauteilen eingesetzt. Beispielsweise werden Urformwerkzeuge im Bereich der Spritzgusstechnik oder der Gusstechnik verwendet. Als Bauteile werden eine Vielzahl von Bestandteilen von Einrichtungen und Vorrichtungen mittels Urformprozessen hergestellt. Beispielsweise werden Gehäuse oder Gehäuseschalen von Konsumgütern wie beispielsweise Mobiltelefonschalen als Spritzgussteile hergestellt.

Herstellungsverfahren, die ein Urformverfahren nutzen, zeichnen sich dadurch aus, dass mit einem Urformwerkzeug eine große Anzahl von Bauteilen in einfacher Weise hergestellt werden kann, die jeweils die durch das Urformwerkzeug vorgegebene Form annehmen. Das Urformwerkzeug stellt somit eine "Negativ"-Form des herzustellenden Bauteils dar.

Urformwerkzeuge werden heutzutage vorzugsweise mittels computergesteuerter Werkzeugmaschinen in automatisierten Verfahrensabläufen hergestellt. Hierbei werden ausgehend von einem CAD-Modell des herzustellenden Bauteils eine oder mehrere Urformwerkzeuge hergestellt, die eine negative Oberflächenform des herzustellenden Bauteils gemäß dem CAD-Modell aufweisen. In der Praxis zeigt es sich jedoch, dass mit Urformwerkzeugen, die eine exakte Negativform des herzustellenden Bauteils aufweisen, in der Regel in einem Urformprozess keine Bauteile herstellbar sind, die dem CAD-Modell des Bauteils entsprechen. In der Regel treten nicht vorhersagbare Abweichungen zwischen dem im Urformprozess gefertigten Bauteil und dem durch das CAD-Modell festgelegten Sollbauteil auf. Solche Abweichungen werden im Stand der Technik meist als "Schwund" bezeichnet. Doch selbst bei Berücksichtigung von Fertigungsabläufen bei der Urformung unter Hinzuziehung von Simulationen ist es bisher nicht gelungen, Urformwerkzeuge herzustellen, die maßhaltige und formgetreue Bauteile herstellen, die mit ihrem CAD-Modell übereinstimmen.

Zur Ermittlung von Abweichungen zwischen dem im Urformprozess hergestellten Bauteil und dem CAD-Modell bzw. einer anderen Sollvorgabe ist es üblich, das Bauteil mit einem Koordinatenmessgerät zu vermessen. Im Stand der Technik sind mechanische Koordinatenmessgeräte bekannt, bei denen eine Oberfläche des Bauteils mit einem Tastkopf abgetastet wird. Hierbei wird der Tastkopf über eine Verstelleinrichtung relativ zu dem Bauteil verfahren. Hierüber ist jeweils die Koordinate im dreidimensionalen Raum des Tastkopfes bekannt. Sobald der Tastkopf das Bauteil berührt, gibt die Koordinate des Tastkopfs eine Oberflächenkoordinate des Bauteils an. Um ein Werkstück bzw. Bauteil auf diese Art und Weise vollständig abzutasten, sind aufwendige und zeitintensive Messungen notwendig. Komplizierte Bauteilformen lassen sich darüber hinaus nur schwierig oder ungenügend mit einem solchen mechanischen Koordinatenmessgerät abtasten.

Im Stand der Technik sind darüber hinaus Koordinatenmessgeräte bekannt, die computertomographiebasierte Verfahren anwenden. Hierbei wird invasive Strahlung zur Untersuchung des Bauteils bzw. Werkstücks verwendet. Bei der Computertomographie (CT) wird das Bauteil beispielsweise in der Regel auf einem Drehtisch angeordnet und durch Drehung des Drehtisches in verschiedene Drehstellungen aus verschiedenen Richtungen von Röntgenstrahlung durchstrahlt. Es sind jedoch auch andere Geometrien der Untersuchungsanordnung möglich und bekannt. Die durch Extinktion in dem Material des Bauteils bzw. Werkstücks geschwächte Strahlung wird orts- und zeitaufgelöst von einer Sensoreinrichtung detektiert. In der Praxis werden beispielsweise zwischen 800 und 1200 Projektionsbilder des Messobjekts aufgenommen, wobei zwischen jeder der Projektionen die Drehstellung um einen konstanten Drehwinkelbetrag verändert wird. Durch die Anwendung eines von mehreren bekannten Verfahren der tomographischen Rekonstruktion, z.B. der gefilterten Rückprojektion, wird daraus ein dreidimensionales Bild des Werkstücks berechnet. Das 3D-Bild gibt jeweils für einzelne kleine Volumenbereiche (Voxel) den lokalen linearen Absorptionskoeffizienten an. Ein Beispiel für die CT wird in DE 39 24 066 A1 beschrieben. Ein CT-Koordinatenmessgerät liefert somit eine 3D-Punktewolke von Oberflächenpunkten des vermessenen Bauteils.

Aus dem Bereich der Zahnheilkunde ist aus einem Artikel von Eva-Maria Brick et al. "Analysis of three-dimensional sinter shrinkage of copings made from alumina in an innovative direct shaping process", erschienen im Band 28 von Computerized Medical Imaging and Graphics, Seiten 159-165, aus dem Jahre 2004 die allgemeine Tatsache bekannt, dass bei keramischem Zahnersatz in Form von aus gesintertem Aluminium hergestellten Kronen im Sinterprozess Schrumpfungen auftreten. Anhand ermittelter Schrumpfungswerte wird ein CAD-Modell zur Herstellung der einzelnen Kronen skaliert.

Aus dem Kapitel "Fertigungsmesstechnik" von Rainer Tutsch, Teil C in: "Handbuch der Mess- und Automatisierungstechnik in der Produktion" 7, Juli 2006 (2006-07-07), Springer, Berlin - Heidelberg, Seiten 199-362 sind allgemein Qualitätsregelkreise bekannt, bei denen Produkte untersucht werden und Untersuchungsergebnisse in den Fertigungsprozess zurückgeführt werden.

Aus der EP 0 875 751 A1 ist ein dreidimensionales computertomographisches Verfahren zum Untersuchen und Vergleichen einer tatsächlichen Geometrie mit einer vorbestimmten Geometrie eines Objekts bekannt. Hierbei wird eine Punktewolke anhand der tatsächlichen Grenzdaten ermittelt. Die tatsächliche Punktwolke wird mit vorbestimmten Objektgeometriedaten verglichen und auf Abweichungen hin untersucht.

Im Stand der Technik ist es notwendig, das ursprünglich mittels computergestützter Werkzeugmaschinen hergestellte Urformwerkzeug in mehreren Iterationsschritten nachzubearbeiten. Hierbei erfolgt eine Veränderung des Urformwerkzeugs in der Regel durch manuelle Eingriffe erfahrenen Formbaupersonals.

Der Erfindung liegt die technische Aufgabe zugrunde, ein Verfahren und eine Vorrichtung anzugeben, mit denen eine Herstellung von Urformwerkzeugen einfacher, insbesondere weitestgehend automatisiert, möglich ist.

Die technische Aufgabe wird erfindungsgemäß durch ein Verfahren mit den Merkmalen des Patentanspruchs 1 sowie eine Vorrichtung bzw. ein System mit den Merkmalen des

Patentanspruchs 5 gelöst. Vorteilhafte Ausgestaltungen der Erfindung ergeben sich aus den Unteransprüchen.

Hierbei ist vorgesehen, dass zunächst ein CAD-Modell des Bauteils empfangen oder erstellt wird. Hierfür umfasst eine Vorrichtung oder ein System zum Herstellen eines Urformwerkzeugs ein Computersystem. Bei dem Computersystem kann es sich um eine Workstation oder auch eine Vielzahl von vernetzten Computern unterschiedlichster Ausgestaltung handeln. Anhand des CAD-Modells des Bauteils bzw. eines hieraus abgeleiteten Oberflächenmodells für das Urformwerkzeug wird anschließend mittels computergesteuerter Maschinen, welche auch NC-Werkzeugmaschinen (Numerical Controll-Maschinen) bezeichnet werden, das Urformwerkzeug für das Bauteil erstellt. Eine Vorrichtung zum Herstellen eines Urformwerkzeuges umfasst somit mit dem Computersystem informationstechnisch gekoppelte computergesteuerte Werkzeugmaschinen zum Fertigen des Urformwerkzeugs unter Verwendung von Steuerprogrammen. Die Steuer- und Regeleinheiten, die hierfür benötigt werden, können in den computergesteuerten Werkzeugmaschinen vorgesehen sein. Andere Ausführungsformen sehen vor, dass die Steuerung und Regelung vollständig in dem Computersystem abläuft und die Werkzeugmaschinen lediglich über Kommunikationsschnittstellen angesteuert werden.

Mit dem so hergestellten Urformwerkzeug wird anschließend eine Entität des Bauteils in einem Urformprozess oder Urformverfahren gefertigt. Mittels einer Urformvorrichtung wird eine Entität des Bauteils mittels des erstellten Urformwerkzeugs gefertigt.

Anschließend werden die Konturen der Entität des Bauteils mittels eines Koordinatenmessgeräts, insbesondere eines computertomographiebasierten Koordinatenmessgeräts, welches eine 3D-Punktewolke von Oberflächenpunkten der Entität des Bauteils liefert, erfasst. Die 3D-Punkte der 3D-Punktewolke werden mit dem CAD-Modell verglichen und ermittelt, ob Abweichungen oberhalb vorfestgelegter Toleranzgrenzen existieren. Falls dieses der Fall ist, (welches, wie sich aus der Aufgabenstellung ergibt, in der Regel immer der Fall ist) wird anhand der ermittelten Abweichungen das Oberflächenmodell des Urformwerkzeugs modifiziert. Hierbei werden entsprechend korrigierte 3D-Punkte erzeugt, welche das modifizierte Oberflächenmodell definieren. Unter Ausnutzung des modifizierten Oberflächemodells für das Urformwerkzeug wird das Urformwerkzeug mittels der computergestützten Werkzeugmaschinen nachbearbeitet oder, falls dieses nicht möglich ist, neu erstellt. Anschließend werden die Schritte des Fertigens einer Entität, eines Erfassens der Konturen der Entität sowie eines Vergleichens der hierbei ermittelten 3D-Punkte mit dem ursprünglichen CAD-Modell sowie gegebenenfalls eines weiteren Modifizierens des Oberflächenmodells und eines erneuten Nachbearbeitens iterativ durchgeführt, bis keine Abweichungen oberhalb der vorfestgelegten Toleranzgrenzen (mehr) existieren. Das Modifizieren des Oberflächenmodells anhand der ermittelten Abweichung wird automatisiert ausgeführt. Hierdurch wird das Herstellungsverfahren weitgehend automatisiert. Nur noch einfache Einrüstarbeiten, Kontrollarbeit usw. sind notwendig, um das Urformwerkzeug für das Bauteil herzustellen. In der Regel reicht ein Iterationsschritt, um ein Urformwerkzeug zu erzeugen, mit dem Bauteile bzw. Werkstücke herstellbar sind, die im Rahmen der vorfestgelegten Toleranzen dem durch das CAD-Modell vorgegebenen Sollbauteil entsprechen.

Um die computergestützten Werkzeugmaschinen optimal ansteuern zu können, ist bei einer Ausführungsform vorgesehen, dass anhand des, gegebenenfalls bereits modifizierten, Oberflächenmodells des Urformwerkzeugs jeweils automatisiert ein NC-Programm (oder NC-Programme) zum Steuern der NC-Werkzeugmaschinen beim Erstellen und/oder Modifizieren/Neuerstellen des Urformwerkzeugs erstellt wird (oder werden).

Vorzugsweise ist vorgesehen, dass zu jedem der 3D-Punkte der erfassten 3D-Punktewolke ein korrigierter 3D-Punkt anhand der ermittelten Abweichung von einem entsprechenden Sollpunkt gemäß des CAD-Modells bestimmt wird. Hierbei versteht es sich, dass eine Punktdichte der 3D-Punkte der 3D-Punktewolke, welche mittels des computertomographiebasierten Koordinatenmessgeräts ermittelt sind, angepasst an eine gewünschte Bauteiltoleranz gewählt wird.

Das Modifizieren des Oberflächenmodells umfasst ein Ermitteln korrigierter 3D-Punkte, die das modifizierte Oberflächenmodell des Urformwerkzeugs festlegen, wobei in erster Näherung die erfassten 3D-Punkte der 3D-Punktewolke entsprechend ihrer ermittelten Abweichung von einem ihnen jeweils entsprechenden Punkt einer Solloberfläche gemäß dem CAD-Modell des Bauteils an der durch das (modifizierte) Oberflächenmodell festgelegten Oberfläche des Urformwerkzeugs gespiegelt werden.

In erster Näherung ist nämlich eine Form an einer Stelle einer Abweichung, um eben diese Abweichung zu korrigieren, um ein Werkstück bzw. Bauteil zu erhalten, welches unter Berücksichtigung des bei der Fertigung stattfindenden Schwunds eine Entität des Bauteils liefert, die mit einer Form übereinstimmt, welche durch das CAD-Modell festgelegt ist.

Bei einer Ausführungsform erfolgt das Spiegeln an der Oberfläche des modifizierten Oberflächenmodells, indem durch einen 3D-Punkt und einen entsprechenden Punkt der Solloberfläche des Bauteils gemäß dem CAD-Modell eine Gerade gelegt wird. Ein Abstandsvektor wird ermittelt, der von dem 3D-Punkt zu dem entsprechenden Punkt der Solloberfläche weist. Der Abstandsvektor wird dann entlang der Gerade so verschoben, dass dessen Fußpunkt mit einem Schnittpunkt der Gerade mit der Oberfläche des Urformwerkzeugs gemäß dem (modifizierten) Oberflächenmodell zusammenfällt, wobei der verschobene Abstandsvektor auf den korrigierten 3D-Punkt weist.

Ein noch verbessertes Ergebnis und somit eine Reduktion der Iterationsschritte auf vorzugsweise einen Iterationsschritt erhält man, wenn die Materialeigenschaften eines zur Fertigung der Entität des Bauteils verwendeten Materials und/oder Parameter des zur Fertigung der Entität des Bauteils verwendeten Fertigungsverfahrens und/oder eine lokale Geometrie um die einzelnen erfassten 3D-Punkte der 3D-Punktewolke herum und/oder eine lokale Geometrie um die entsprechenden Sollpunkte des CAD-Modells und/oder eine lokale Geometrie um die den Sollpunkten entsprechenden Punkte der Oberfläche gemäß dem (modifizierten) Oberflächenmodell und/oder eine lokale Geometrie um die einzelnen sich ergebenden korrigierten 3D-Punkte beim Ermitteln der korrigierten 3D-Punkte berücksichtigt werden. Eine Berücksichtigung der unterschiedlichen lokalen Geometrien ist deshalb von Vorteil und wichtig, weil in Abhängigkeit des verwendeten Materials im Urformverfahren Abweichungen, d.h. Veränderungen an dem erstellen Urformwerkzeug, vorzunehmen sind, die größer bzw. kleiner als die Abweichungen sind, welche durch einen Vergleich der Entität des Bauteils mit dem CAD-Modell ermittelt sind. Sind beispielsweise bei einer als Spritzgussform ausgebildeten Urformwerkzeug schmale, tiefe Vertiefungen vorgesehen, um dünne, vorspringende Strukturen auf dem Bauteil auszubilden, so kann es notwendig sein, dass die Vertiefung eine wesentlich größere Breite aufweist als die beabsichtigten vorspringenden Strukturen des Bauteils einmal aufweisen sollen. Ebenso können Glättungsalgorithmen verwendet werden, um für einzelne Messpunkte, die eine lokale starke Abweichung aufweisen, eine stetige und keine unerwünschten Kanten aufweisende Form des Urformwerkzeugs zu erhalten.

Die Merkmale der erfindungsgemäßen Vorrichtung bzw. des erfindungsgemäßen Systems weisen dieselben Vorteile auf wie die entsprechenden Merkmale des erfindungsgemäßen Verfahrens.

Nachfolgend wird die Erfindung anhand bevorzugter Ausführungsbeispiele unter Bezugnahme auf eine Zeichnung näher erläutert. Hierbei zeigen:
- Fig. 1: eine schematische Darstellung eines Systems bzw. einer Vorrichtung zum Herstellen eines Urformwerkzeugs;
- Fig. 2: eine schematische Darstellung zur Erläuterung der Nachbearbeitung des Urformwerkzeugs;
- Fig. 3: eine schematische Darstellung einer Überlagerung der Konturen einer gefertigten Entität eines Bauteils, einer Sollform des Bauteils und einer modifizierten Oberflächenform, in die das Urformwerkzeug zu überführen ist; und
- Fig. 4: eine schematische Darstellung ähnlich zu der nach Fig. 3 für einen nachfolgenden Iterationsschritt.

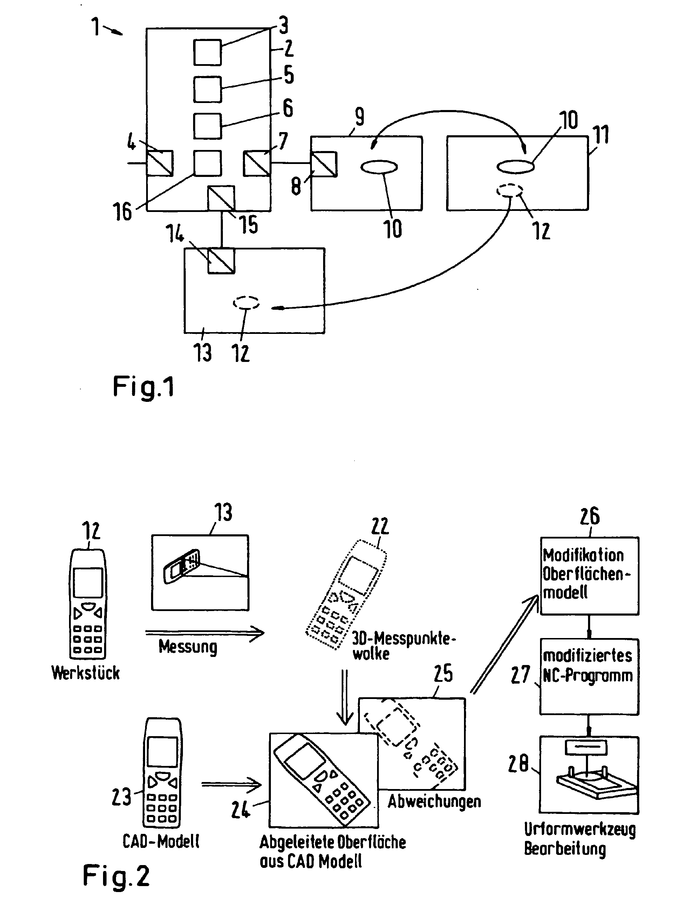

In Fig. 1 ist schematisch ein System bzw. eine Vorrichtung 1 zum Herstellen eines Urformwerkzeugs dargestellt. Die Vorrichtung umfasst ein Computersystem 2, welches ein einzelner Computer sein kann oder aus mehreren miteinander vernetzten oder auf andere Weise kommunikationstechnisch miteinander in Austausch stehenden Computern bestehen kann. Das Computersystem ist so ausgestaltet, dass auf ihm ein computergestütztes Design eines Bauteils ausgeführt werden kann, so dass ein CAD-Modell des zu fertigen Bausteins hergestellt wird. Das Computersystem 2 umfasst somit ein Designmodul 3. Alternativ können über eine Schnittstelle 4 die Daten eines CAD-Modells des Bauteils empfangen werden. Anhand des CAD-Modells wird ein Oberflächenmodell für das herzustellende Urformwerkzeug abgeleitet. Ferner kann aus dem CAD-Modell des Bauteils eine Solloberfläche des Bauteils ermittelt werden. Bei der Ermittlung des Oberflächenmodells können bei einigen Ausführungsformen bereits Parameter des für die Fertigung des Bauteils verwendeten Materials, Parameter eines Fertigungsverfahrens und Erfahrungswerte, die in Form von Daten, beispielsweise Vorlagen für bestimmte geometrische Form- und/oder Oberflächeneinheiten abgelegt sind, verwendet werden, so dass bereits das erste Oberflächenmodell der Werkzeugform von der Solloberfläche des Bauteils abweichen kann. Die Errechnung bzw. Ableitung des Oberflächenmodells erfolgt in einem Oberflächenmodellmodul 5 des Computersystems 2. Anhand des Oberflächenmodells für das Urformwerkzeug werden Steuerungsprogramme (NC-Programme) in einem NC-Programmmodul 6 erzeugt. Mit Hilfe dieser NC-Programme, die über Schnittstellen 7, 8 zwischen dem Computersystem und computergesteuerten Werkzeugmaschinen 9 ausgetauscht werden, wird ein Urformwerkzeug 10 hergestellt. Das Urformwerkzeug 10 weist eine Oberfläche auf, die dem Oberflächenmodell entspricht. Anschließend wird in einer Urformvorrichtung 11 mit Hilfe des Urformwerkzeugs 10 eine Entität 12 des herzustellenden Bauteils gefertigt.

Die Entität 12 des Bauteils wird in einem Koordinatenmessgerät 13 vermessen. Das Koordinatenmessgerät ist vorzugsweise als computertomographiebasiertes Koordinatenmessgerät ausgestaltet. Das computertomographiebasierte Koordinatenmessgerät liefert eine 3D-Punktewolke von 3D-Punkten, die eine ermittelte Oberflächenkontur der Entität 12 des Bauteils angeben. Diese Daten werden über Schnittstellen 14, 15 dem Computersystem 2 übermittelt. Ein Abweichungsmodul 16 ermittelt eine Abweichung der so ermittelten Oberflächenform der gefertigten Entität 12 des Bauteils von der Solloberfläche, welche durch das CAD-Modell festgelegt ist. Anhand der Abweichungen ermittelt das Oberflächenmodellmodul 5 ein modifiziertes Oberflächenmodell der Oberfläche des Urformwerkzeugs. Anschließend werden mit dem NC-Programmmodul 6 veränderte NC-Programme erstellt und an die computergesteuerten Werkzeugmaschinen 9 übermittelt. Mittels dieser computergesteuerten Werkzeugmaschine 9 wird das Urformwerkzeug 10 nachbearbeitet bzw., wenn dies nicht möglich ist, neu hergestellt, wobei eine Oberflächenkontur des Urformwerkzeugs 10 nun der Oberfläche gemäß dem modifizierten Oberflächenmodell entspricht. Anschließend wird eine weitere Entität des Bauteils in der Urformvorrichtung 11 gefertigt. Diese wird erneut mit dem Koordinatenmessgerät 13 vermessen. Von dem Abweichungsmodul 16 werden erneut die Abweichungen von dem CAD-Modell ermittelt und, falls noch Abweichungen oberhalb einer Toleranzgrenze vorliegen, erneut eine Modifizierung des Urformwerkzeugs 10 anhand der ermittelten Abweichungen vorgenommen.

Liegen keine Abweichungen oberhalb der vorfestgelegten Toleranzgrenze vor, so ist das Urformwerkzeug 10 fertig hergestellt und kann beispielsweise in einer Serienfertigung zum Herstellen einer Vielzahl von Entitäten des Bauteils eingesetzt werden.

In Fig. 2 sind noch einmal die Verfahrensschritte zum Modifizieren bzw. Überarbeiten des Urformwerkzeugs dargestellt. Gleiche technische Merkmale sind mit denselben Bezugszeichen versehen. Bei der Entität 12 des Bauteils handelt es sich im dargestellten Fall um eine Schale eines Mobilfunktelefons. Dieses wird zunächst mittels des Koordinatenmessgeräts 13, welches vorzugsweise als computertomographiebasiertes Koordinatenmessgerät ausgebildet ist, vermessen. Hierbei wird die Entität des Bauteils mehrfach unter unterschiedlichen Orientierungen von Röntgenstrahlung durchstrahlt, die sich ergebenden Durchstrahlungsbilder werden mittels eines Computers in eine 3D-Messpunktewolke (kurz als 3D-Punktewolke 22 bezeichnet) umgerechnet, die Koordinatenpunkte einer Oberfläche der Entität des Bauteils repräsentieren.

Von dem Bauteil existiert ferner ein CAD-Modell 23. Dieses wird, wie in Block 24 angedeutet ist, mit der 3D-Punktewolke 22 verglichen. Es ergeben sich Abweichungen, die schematisch in dem Block 25 angedeutet sind. Diese Abweichungen werden genutzt, um ein Oberflächenmodell des Urformwerkzeugs zu modifizieren 26. Dies bedeutet, dass beispielsweise ein Standard Template Library, d.h. Vorlagen für Bestandteile einer Oberfläche, modifiziert werden bzw. modifizierte Vorlagen verwendet werden, um das modifizierte Oberflächenmodell zu erhalten. Alternativ kann ein Punktemodell verwendet und modifiziert werden. Die Repräsentation des Oberflächenmodells kann angepasst an des Bauteil gewählt werden. Bevorzugt wird ein Punktemodell verwendet Aus dem modifizierten Oberflächenmodell wird ein modifiziertes NC-Programm 27 abgeleitet, welches zum Steuern der computergesteuerten Werkzeugmaschine 28 beim Überarbeiten des Urformwerkzeugs verwendet wird.

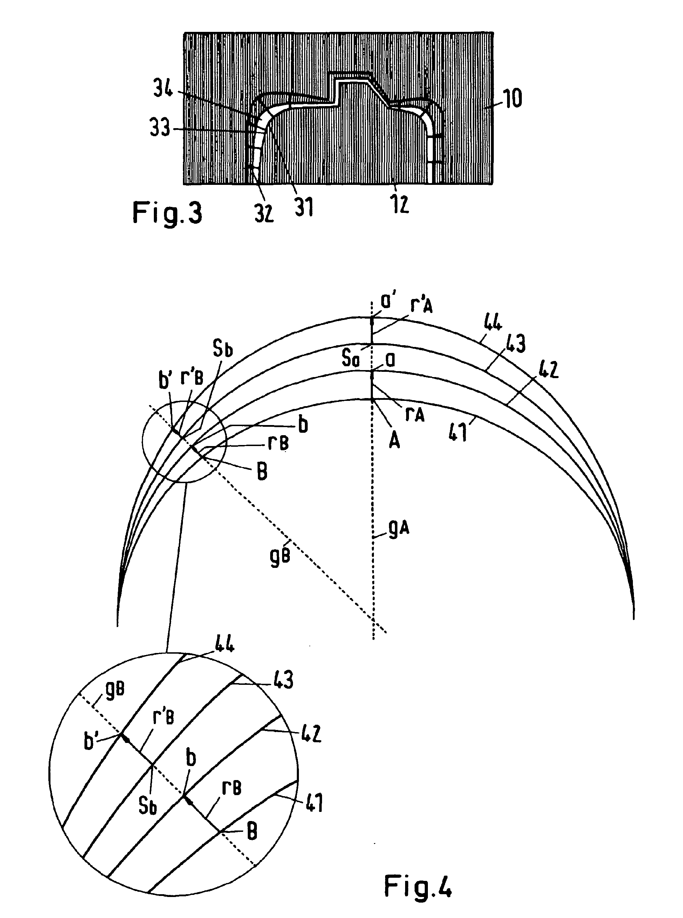

In Fig. 3 sind eine Kontur 31 einer Entität 12 des gefertigten Bauteils, eine Kontur 32 einer Solloberfläche gemäß dem CAD-Modell, die in dem beschriebenen Beispiel ebenfalls einer Oberfläche des Urformwerkzeugs gemäß dem auf dem CAD-Modell abgeleiteten Oberflächenmodells des Urformwerkzeugs 10 gleicht (erster lterationsschritt), und eine Kontur 33 der Oberfläche, die das Urformwerkzeug gemäß einem modifizierten Oberflächenmodell annehmen soll, einander überlagert dargestellt. Gut zu erkennen ist ein Schwund 34, welcher durch eine Fläche zwischen der Kontur 31 der Entität des Bauteils und einer Solloberfläche 32 gemäß dem CAD-Modell repräsentiert ist. Je größer eine Abweichung eines Oberflächenpunktes, d.h. eines 3D-Punktes der 3D-Punktewolke der gefertigten Entität 12 des Bauteils von einem entsprechenden Punkt der Solloberfläche ist, desto stärker muss die Oberflächenform des modifizierten Oberflächenmodells von dem CAD-Modell bzw. der Oberflächenform gemäß dem ursprünglichen Oberflächenmodell abweichen. Hierbei werden die 3D-Punkte, die mit dem Koordinatenmessgerät ermittelt sind, in erster Näherung an der Oberfläche des CAD-Modells gespiegelt. Dies gilt jedoch nur für einen ersten Iterationsschritt.

In Fig. 4 sind eine Kontur 41 einer weiteren Entität eines weiteren Bauteils, die mittels des Koordinatenmessgeräts ermittelt ist, eine Kontur 42 einer Solloberfläche gemäß dem CAD-Modell für das weitere Bauteil, eine Kontur 43 einer Oberfläche des Urformwerkzeugs, welche bereits modifiziert wurde oder dessen ursprüngliches Oberflächenmodell aufgrund einer Berücksichtigung von Parametern der Herstellung des Bauteils bereits ursprünglich gegenüber der Solloberfläche des Bauteils modifiziert war, sowie eine nach einer erneuten Modifizierung des Oberflächenmodells des Urformwerkzeugs erhaltenen Oberflächenkontur 44 überlagert dargestellt. Für zwei 3D-Punkte A, B der ermittelten Oberflächenkontur 41 der Entität des weiteren Bauteils sind Abstandsvektor r_{A}, r_{B} zu entsprechenden Punkten a, b auf Kontur 42 der Solloberfläche gemäß dem CAD-Modell abgetragen. Ferner sind Geraden g_{A} und g_{B} durch einander entsprechende Punkte A, a und B, b festgelegt. Die ermittelten Abstandsvektoren r_{A} und r_{B} werden nun vorzugsweise zur Ermittlung korrigierter 3D-Koordinatenpunkte a', b', die das modifizierte Oberflächenmodell des Urformwerkzeugs festlegen, verwendet, indem diese entlang der Geraden g_{A} und g_{B} so verschoben werden, dass jeweils ein Fußpunkt mit einem Schnittpunkt Sₐ bzw. S_{b} der jeweiligen Geraden g_{A}, g_{B} mit der Kontur des Oberflächenmodells der Urformwerkzeugversion zusammenfällt, mit der die Entität des weiteren Bauteils erzeugt ist. Spitzen der so verschobenen Abstandsvektoren r'_{A}, r'_{B} weisen nun auf die entsprechenden korrigierten 3D-Punkte a', b', welche in erster Näherung die Kontur 44 des modifizierten Oberflächenmodells des Urformwerkzeugs festlegen. Bei genauer Betrachtung ist in dem gezeigten Ausschnitt zu erkennen, dass die tatsächlich ermittelte Kontur 44 nicht durch den korrigierten 3D-Punkt b' verläut. Dies hat seine Ursache darin, dass neben der absoluten Abweichung auch eine lokale Geometrie der einzelnen unterschiedlichen Konturen 41-44 sowie Parametern des Materials, welches zur Fertigung des weiteren Bauteils verwendet wird, sowie andere Verfahrensparameter des Urformverfahrens berücksichtigt werden.

Die dargestellten Ausführungsformen sind lediglich exemplarische Ausführungsformen.

### Bezugszeichenliste

- 1: Vorrichtung/System zum Herstellen eines Urformwerkzeugs
- 2: Computersystem
- 3: Designmodul
- 4: Schnittstelle
- 5: Oberflächenmodellmodul
- 6: NC-Programmmodul
- 7, 8: Schnittstelle
- 9: computergesteuerte Werkzeugmaschine(n)
- 10: Werkzeugform
- 11: Urformvorrichtung
- 12: Entität eines Bauteils
- 13: Koordinatenmessgerät
- 14, 15: Schnittstellen
- 16: Abweichungsmodul
- 22: 3D-Punktewolke
- 23: CAD-Modell
- 24: Block, der Abweichungsermittlungen repräsentiert
- 25: Block, der Abweichungen darstellt
- 26: Modifizieren des Oberflächenmodells
- 27: Ableiten eines modifizierten NC-Programms
- 28: Überarbeiten der Werkzeugform
- 31: Kontur einer Entität des gefertigten Bauteils
- 32: Kontur einer Solloberfläche
- 33: Kontur der Oberfläche des modifizierten Oberflächenmodells
- 34: Schwund
- 41: Kontur einer weiteren Entität
- 42: Kontur einer Solloberfläche gemäß dem CAD-Modell
- 43: Kontur einer Oberfläche des Urformwerkzeugs
- 44: modifizierte Oberflächenkontur des Urformwerkzeugs
- A, B: 3D-Punkte der vermessenen Entität
- a, b: Punkte auf der Sollfläche des Bauteils gemäß dem CAD-Modell
- g_{A}: Gerade durch die Punkte A und a
- g_{B}: Gerade durch die Punkte B und b
- Sₐ: Schnittpunkte Gerade g_{A} mit der Kontur der Oberfläche der Werkzeugform, mit der die vermessene Entität gefertigt ist
- S_{b}: Schnittpunkte Gerade g_{B} mit der Kontur der Oberfläche der Werkzeugform, mit der die vermessene Entität gefertigt ist
- r_{A}: Abstandsvektor von dem Punkt A zu dem Punkt a
- r_{B}: Abstandsvektor von dem Punkt B zu dem Punkt b

## Patentansprüche

1. Verfahren zum Herstellen eines Urformwerkzeugs (10) für ein Bauteil umfassend:
a) Empfangen oder Erstellen eines CAD-Modells (23) des Bauteils;
b) Ableiten eines Oberflächenmodells für das Urformwerkzeug (10) anhand des CAD-Modells (23) des Bauteils;
c) Erstellen des Urformwerkzeugs (10) mittels NC-Maschinen unter Verwendung des Oberflächenmodells;
d) Fertigen einer Entität (12) des Bauteils mit dem Urformwerkzeug (10);
e) Erfassen der Konturen der Entität (12) des Bauteils mittels eines Computertomographie-basierten Koordinatenmessgeräts, welches eine 3D-Punktewolke (22) von Oberflächenpunkten der Entität (12) des Bauteils liefert;
f) Vergleichen der 3D-Punkte der 3D-Punktewolke (22) mit dem CAD-Modell (23) und Ermitteln, ob Abweichungen oberhalb vorfestgelegter Toleranzgrenzen existieren und falls dieses der Fall ist,
g) Modifizieren des Oberflächenmodells anhand der ermittelten Abweichungen;
h) Nachbearbeiten des Urformwerkzeugs (10) oder Neuerstellen des Urformwerkzeugs (10) mittels der NC-Maschinen anhand des modifizierten Oberflächenmodells;
i) Wiederholen der Schritte d) bis h), bis keine Abweichungen oberhalb der vorfestgelegten Toleranzgrenzen existieren,
**dadurch gekennzeichnet, dass**
das Modifizieren des Oberflächenmodells ein Ermitteln korrigierter 3D-Punkte (a', b') umfasst, die das modifizierte Oberflächenmodell festlegen, wobei in erster Näherung die erfassten 3D-Punkte (A, B) der 3D-Punktewolke (22) entsprechend ihrer ermittelten Abweichung von einem ihnen jeweils entsprechenden Punkt (a, b) einer Solloberfläche gemäß dem CAD-Modell (23) an der durch das Oberflächenmodell oder gegebenenfalls durch das modifizierte Oberflächenmodell festgelegten Oberfläche des Urformwerkzeugs (10) gespiegelt werden.

2. Verfahren nach Anspruch 1, **dadurch gekennzeichnet, dass** das Spiegeln an der durch das Oberflächenmodell oder gegebenenfalls durch das modifizierte Oberflächenmodell festgelegten Oberfläche des Urformwerkzeugs erfolgt, indem durch einen 3D-Punkt (A, B) und einen entsprechenden Punkt (a, b) der Solloberfläche des Bauteils gemäß dem CAD-Modell (23) eine Grade (g_{A}, g_{B}) gelegt wird, und ein Abstandsvektor (r_{A}, r_{B}) ermittelt wird, der von dem 3D-Punkt (A, B) zu dem entsprechenden Punkt (a, b) der Solloberfläche weist, der Abstandsvektor (r_{A}, r_{B}) entlang der Gerade (g_{A}, g_{B}) so verschoben wird, dass dessen Fußpunkt mit einem Schnittpunkt (Sₐ, S_{b}) der Gerade (g_{A}, g_{B}) mit der Oberfläche des Urformwerkzeugs (10) gemäß dem Oberflächenmodell oder gegebenenfalls dem bereits zuvor modifizierten Oberflächenmodell zusammenfällt, wobei der verschobene Abstandsvektor (r'_{A}, r'_{B}) auf den korrigierten 3D-Punkt (a', b') weist.

3. Verfahren nach einem der vorangehenden Ansprüche, **dadurch gekennzeichnet, dass** Materialeigenschaften eines zur Fertigung der Entität (12) des Bauteils verwendete Materials, Parameter des zur Fertigung der Entität (12) des Bauteils verwendeten Fertigungsverfahren, eine lokale Geometrie um die einzelnen erfassten 3D-Punkte (A, B) der 3D-Punktewolke herum und/oder eine lokale Geometrie um die entsprechenden Sollpunkte (a, b) des CAD-Modells (23) und/oder eine lokale Geometrie um die den Sollpunkten entsprechenden Punkte (Sₐ, S_{b}) der Oberfläche gemäß dem (modifizierten) Oberflächenmodell und/oder eine lokale Geometrie um die einzeln sich ergebenden korrigierten 3D-Punkte (a, b) beim Ermitteln der korrigierten 3D-Punkte (a, b) berücksichtigt werden.

4. Verfahren nach einem der vorangehenden Ansprüche, **dadurch gekennzeichnet, dass** anhand des Oberflächenmodells und des modifizierten Oberflächenmodells jeweils automatisiert ein NC-Programm zum Steuern der NC-Maschinen beim Erstellen und/oder Modifizieren/Neuerstellen des Urformwerkzeugs (10) erstellt wird.

5. Vorrichtung zum Herstellen eines Urformwerkzeugs (10) für ein Bauteil umfassend
a) ein Computersystem (2) zum Erzeugen eines CAD-Modells (23) des Bauteils oder Empfangen der Daten eines CAD-Modells (23) des Bauteils;
b) mit dem Computersystem (2) informationstechnisch gekoppelte NC-Maschinen (9) zum Fertigen des Urformwerkzeugs (10) unter Verwendung von NC-Programmen;
c) wobei das Computersystem (2) ausgebildet ist, anhand des CAD-Modells (23) ein Oberflächenmodell des Urformwerkzeugs (10) abzuleiten und hiermit NC-Programme zum Steuern von NC-Maschinen (9) automatisiert zu erstellen;
d) eine Urformvorrichtung (11) zum Fertigen einer Entität (12) des Bauteils mittels des erstellten Urformwerkzeugs (10);
e) ein Computertomographie-basiertes Koordinatenmessgerät zum Vermessen einer gefertigten Entität (12) des Bauteils und Liefern einer 3D-Punktewolke (22) von Oberflächenpunkten der Entität (12) des Bauteils;
f) wobei das Computersystem (2) ausgebildet ist, die 3D-Punkte (A, B) der 3D-Punktewolke (22) mit dem CAD-Modell (23) zu vergleichen und zu ermitteln, ob Abweichungen oberhalb vorfestgelegter Toleranzgrenzen existieren und falls dieses der Fall ist, das Oberflächenmodells anhand der ermittelten Abweichungen zu modifizieren und anhand des modifizierten Oberflächenmodells des Urformwerkzeugs (10) modifizierte NC-Programme zum Nachbearbeiten des Urformwerkzeugs (10) oder Neuherstellen des Urformwerkzeugs (10) mit den NC-Maschinen (9) zu erstellen und eine Nachbearbeitung/ Neuerstellung zu steuern oder anzustoßen;
g) wobei eine Fertigung von Entitäten, ein Vermessen der Entitäten, Ermitteln der Abweichungen von dem CAD-Modell (23), ein Modifizieren des Oberflächenmodells des Urformwerkzeugs und erneutes Modifizieren/Neuerstellen des Urformwerkzeugs iterativ weitestgehend automatisiert ausgeführt werden,
**dadurch gekennzeichnet, dass**
das das Computersystem (2) ausgebildet ist, beim Modifizieren des Oberflächenmodells korrigierte 3D-Punkte (a', b'), die das modifizierte Oberflächenmodell festlegen, zu ermitteln, indem in erster Näherung die erfassten 3D-Punkte (A, B) der 3D-Punktewolke (22) entsprechend ihrer ermittelten Abweichung von einem ihnen jeweils entsprechenden Punkt (a, b) einer Solloberfläche gemäß dem CAD-Modell (23) an der durch das Oberflächenmodell oder gegebenenfalls durch das modifizierte Oberflächenmodell festgelegten Oberfläche des Urformwerkzeugs (10) gespiegelt werden.

6. Vorrichtung nach Anspruch 5, **dadurch gekennzeichnet, dass** das Computersystem ausgebildet ist, das Spiegeln an der durch das Oberflächenmodell oder gegebenenfalls durch das modifizierte Oberflächenmodell festgelegten Oberfläche des Urformwerkzeugs auszuführen, indem durch einen 3D-Punkt (A, B) und einen entsprechenden Punkt (a, b) der Solloberfläche des Bauteils gemäß dem CAD-Modell (23) eine Grade (g_{A}, g_{B}) gelegt wird, und ein Abstandsvektor (r_{A}, r_{B}) ermittelt wird, der von dem 3D-Punkt (A, B) zu dem entsprechenden Punkt (a, b) der Solloberfläche weist, der Abstandsvektor (r_{A}, r_{B}) entlang der Gerade (g_{A}, g_{B}) so verschoben wird, dass dessen Fußpunkt mit einem Schnittpunkt (Sₐ, S_{b}) der Gerade (g_{A}, g_{B}) mit der Oberfläche des Urformwerkzeugs (10) gemäß dem Oberflächenmodell oder gegebenenfalls dem bereits zuvor modifizierten Oberflächenmodell zusammenfällt, wobei der verschobene Abstandsvektor (r'_{A}, r'_{B}) auf den korrigierten 3D-Punkt (a', b') weist.

## Claims

1. A method for producing a master pattern tool (10) for a component, comprising:
a) receiving or creating a CAD model (23) of the component;
b) deriving a surface model for the master pattern tool (10) based on the CAD model (23);
c) creating the master pattern tool (10) by means of NC machines using the surface model;
d) producing an entity (12) of the component using the master pattern tool (10);
e) detecting the contours of the entity (12) of the component by means of a computer tomography-based coordinate measuring device which supplies a 3D point cloud (22) of surface points of the entity (12) of the component;
f) comparing the 3D points of the 3D point cloud (22) to the CAD model (23) and determining whether any deviations exist above predefined tolerance thresholds and, if this is the case,
g) modifying the surface model based on the detected deviations;
h) reworking the master pattern tool (10) or recreating the master pattern tool (10) by means of the NC machines based on the modified surface model;
i) repeating the steps d) to h) until no more deviations exist above the predefined tolerance thresholds, **characterized in that** modifying the surface model comprises determining corrected 3D points (a', b') which define the modified surface model, wherein in a first approximation, the detected 3D points (A, B) of the 3D point cloud (22) are mirrored corresponding to their detected deviation from a point (a, b), which point corresponds in each case to said 3D points and belongs to a target surface according to the CAD model (23), at the master pattern tool's (10) surface defined by the surface model or, if applicable, by the modified surface model.

2. The method according to claim 1, **characterized in that** mirroring at the master pattern tool's surface defined by the surface model or, if applicable, by the modified surface model is carried out **in that** a straight line (g_{A}, g_{B}) is drawn through a 3D point (A, B) and a corresponding point (a, b) of the target surface of the component according to the CAD model (23), and a distance vector (r_{A}, r_{B}) is determined which points from the 3D point (A, B) to the corresponding point (a, b), the distance vector (r_{A}, r_{B}) is displaced along the straight line (g_{A}, g_{B}) in such a manner that the foot of said distance vector coincides with an intersection (Sₐ, S_{b}) of the straight line (G_{A}, G_{B}) with the surface of the master pattern tool (10) according to the surface model or, if applicable, the previously modified surface model, wherein the displaced distance vector (r'_{A}, r'_{B}) points to the corrected 3D point (a', b').

3. The method according to any one of the preceding claims, **characterized in that** material properties of a material used for producing the entity (12) of the component, parameters of the production method used for producing the entity (12) of the component, a local geometry around the individual detected 3D points (A, B) of the 3D point cloud, and/or a local geometry around the corresponding target points (a, b) of the CAD model (23), and/or a local geometry around the points (Sₐ, S_{b}) of the surface according to the (modified) surface model which correspond to the target points, and/or a local geometry around the individually resulting 3D points (a, b) are considered when determining the corrected 3D points (a, b).

4. The method according to any one of the preceding claims, **characterized in that** based on the surface model and the modified surface model, a NC program for controlling the NC machines is created in each case in an automated manner when creating and/or modifying/recreating the master pattern tool (10).

5. A device for producing a master pattern tool (10) for a component, comprising
a) a computer system (2) for generating a CAD model (23) of the component or receiving the data of a CAD model (23) of the component;
b) NC machines (9) coupled in an information-processing manner with the computer system (2) for producing the master pattern tool (10) using NC programs;
c) wherein the computer system (2) is configured to derive, based on the CAD model (23), a surface model of the master pattern tool (10) and to create NC programs therewith in an automated manner for controlling NC machines (9);
d) a master pattern device (11) for producing an entity (12) of the component by means of the created master pattern tool (10);
e) a computer tomography-based coordinate measuring device for measuring a produced entity (12) of the component and supplying a 3D point cloud (22) of surface points of the entity (12) of the component;
f) wherein the computer system (2) is configured to compare the 3D points (A, B) of the 3D point cloud (22) with the CAD model (23) and to determine whether deviations exist above a predefined tolerance threshold and, if this is the case, to modify the surface model based on the detected deviations and to create, based on the modified surface model of the master pattern tool (10), modified NC programs for reworking the master pattern tool (10) or reproducing the master pattern tool (10) with the NC machines (9) and to control or initiate reworking/reproducing;
g) wherein producing entities, measuring the entities, determining the deviations from the CAD model (23), modifying the surface model of the master pattern tool and remodifying/recreating the master pattern tool is carried out iteratively and automated to the greatest possible extent,
**characterized in that** the computer system (2) is configured to determine 3D points (a', b'), which are corrected during the modification of the surface model and define the modified surface, **in that** in a first approximation, the detected 3D points (A, B) of the 3D point cloud (22) are mirrored corresponding to their detected deviation from a point (a, b), which point corresponds in each case to said 3D points and belongs to a target surface according to the CAD model (23), at the master pattern tool's (10) surface defined by the surface model or, if applicable, by the modified surface model.

6. The device according to claim 5, **characterized in that** the computer system is configured to carry out the mirroring at the master pattern tool's surface defined by the surface model or, if applicable, by the modified surface model **in that** a straight line (g_{A}, g_{B}) is drawn through a 3D point (A, B) and a corresponding point (a, b) of the target surface of the component according to the CAD model (23), and a distance vector (r_{A}, r_{B}) is determined which points from the 3D point (A, B) to the corresponding point (a, b), the distance vector (r_{A}, r_{B}) is displaced along the straight line (g_{A}, g_{B}) in such a manner that the foot of said distance vector coincides with an intersection (Sₐ, S_{b}) of the straight line (g_{A}, g_{B}) with the surface of the master pattern tool (10) according to the surface model or, if applicable, the previously modified surface model, wherein the displaced distance vector (r'_{A}, r'_{B}) points to the corrected 3D point (a', b').

## Revendications

1. Procédé pour la fabrication d'un outil de formage (10) pour une pièce, comprenant :
a) réception ou établissement d'un modèle de CAO (23) de la pièce ;
b) dérivation d'un modèle surfacique pour l'outil de formage (10) à l'aide du modèle de CAO (23) de la pièce ;
c) confection de l'outil de formage (10) au moyen de machines à CN en utilisant le modèle surfacique ;
d) préparation d'une entité (12) de la pièce avec l'outil de formage (10) ;
e) saisie des contours de l'entité (12) de la pièce à l'aide d'un appareil de mesure de coordonnées basé sur une tomographie par ordinateur, lequel fournit un nuage de points en 3D (22) de points de la surface de l'entité (12) de la pièce ;
f) comparaison des points en 3D du nuage de points en 3D (22) avec le modèle de CAO (23) et détermination de l'existence d'écarts se situant au-dessus de seuils de tolérance prédéterminés ; et si tel est le cas,
g) modification du modèle surfacique à l'aide des écarts identifiés ;
h) post-traitement de l'outil de formage (10) ou nouvelle confection de l'outil de formage (10) à l'aide des machines à CN sur la base du modèle surfacique modifié ;
i) répétition des étapes d) à h) jusqu'à ce qu'il n'y ait plus d'écarts dépassant les seuils de tolérance prédéterminés,
**caractérisé en ce que**
la modification du modèle surfacique comprend une détermination de points en 3D corrigés (a', b'), lesquels déterminent le modèle surfacique modifié, moyennant quoi dans une première approximation, les points en 3D (A, B) saisis du nuage de points en 3D (22) sont réfléchis de manière correspondante à leur écart identifié par rapport à un point (a, b) respectif leur correspondant d'une surface de consigne conformément au modèle de CAO (23) à la surface de l'outil de formage (10) déterminée par le modèle surfacique ou le cas échéant par le modèle surfacique modifié.

2. Procédé selon la revendication 1, **caractérisé en ce que** la réflexion à la surface de l'outil de formage déterminée par le modèle surfacique ou le cas échéant par le modèle surfacique modifié, s'effectue **en ce que** grâce à un point en 3D (A, B) et un point correspondant (a, b) de la surface de consigne de la pièce, conformément au modèle de CAO (23), une droite (g_{A}, g_{B}) est posée, et un vecteur d'espacement (r_{A}, r_{B}) étant déterminé, lequel pointe à partir du point en 3D (A, B) vers le point correspondant (a, b) de la surface de consigne, le vecteur d'espacement (r_{A}, r_{B}) étant décalé le long de la droite (g_{A}, g_{B}) de manière à ce que son point de base coïncide avec un point d'intersection (Sₐ, S_{b}) de la droite (g_{A}, g_{B}) avec la surface de l'outil de formage (10) conformément au modèle surfacique ou le cas échéant au modèle surfacique déjà modifié préalablement, le vecteur d'espacement (r'_{A}, r'_{B}) décalé pointant vers le point en 3D (a', b') corrigé.

3. Procédé selon l'une des revendications précédentes, **caractérisé en ce que** l'on tient compte de propriétés de matériau d'un matériau utilisé pour la préparation de l'entité (12) de la pièce, de paramètres du procédé de préparation utilisés pour la préparation de l'entité (12) de la pièce, d'une géométrie locale autour des points en 3D (A, B) individuels saisis du nuage de points en 3D et/ou d'une géométrie locale autour des points de consigne (a, b) correspondants du modèle de CAO (23) et/ou d'une géométrie locale autour des points (Sₐ, S_{b}) correspondants aux points de consigne de la surface conformément au modèle surfacique (modifié) et/ou d'une géométrie locale autour des points en 3D (a, b) individuels corrigés obtenus lors de la détermination des points en 3D (a, b) corrigés.

4. Procédé selon l'une des revendications précédentes, **caractérisé en ce qu'**à l'aide du modèle surfacique et du modèle surfacique modifié, on confectionne respectivement de manière automatisée un programme CN pour commander les machines à CN lors de la confection et/ou de la modification/nouvelle confection de l'outil de formage (10).

5. Dispositif pour la fabrication d'un outil de formage (10) pour une pièce comprenant
a) un système informatique (2) pour générer un modèle de CAO (23) de la pièce ou réceptionner les données d'un modèle de CAO (23) de la pièce ;
b) des machines à CN (9) couplées selon une technologie d'information au système informatique (2) pour la fabrication de l'outil de formage (10) en utilisant des programmes CN ;
c) le système informatique (2) étant réalisé afin de dériver à l'aide du modèle de CAO (23) un modèle surfacique de l'outil de formage (10) afin de confectionner grâce à celui-ci de manière automatisée des programmes CN pour commander des machines à CN (9) ;
d) un dispositif de formage (11) pour la préparation d'une entité (12) de la pièce à l'aide de l'outil de formage (10) confectionné ;
e) un appareil de mesure de coordonnées basé sur une tomographie par ordinateur pour mesurer une entité (12) préparée de la pièce et délivrer un nuages de points en 3D (22) de points de la surface de l'entité (12) de la pièce ;
f) le système informatique (2) étant réalisé pour comparer les points en 3D (A, B) du nuage de points en 3D (22) avec le modèle de CAO (23) et déterminer l'existence d'écarts se situant au-dessus de seuils de tolérance prédéterminés ; et si tel est le cas, modifier le modèle surfacique à l'aide des écarts identifiés et établir à l'aide du modèle surfacique modifié de l'outil de formage (10) des programmes CN modifiés pour le post-traitement de l'outil de formage (10) ou nouvellement confectionner l'outil de formage (10) avec les machines à CN (9) et commander ou lancer un post-traitement/nouvelle confection ;
g) une préparation d'entités, une mesure des entités, une détermination des écarts par rapport au modèle de CAO (23), une modification du modèle surfacique de l'outil de formage et une nouvelle modification/nouvelle confection de l'outil de formage étant réalisées itérativement de manière essentiellement automatisée,
**caractérisé en ce que**
le système informatique (2) est réalisé pour déterminer, lors de la modification du modèle surfacique, des points en 3D corrigés (a', b') qui déterminent le modèle surfacique modifié **en ce que** dans une première approximation, les points en 3D saisis (A, B) du nuage de points en 3D (22) sont réfléchis de manière correspondante à leur écart identifié par rapport à un point (a, b) respectif leur correspondant d'une surface de consigne conformément au modèle de CAO (23) à la surface de l'outil de formage (10) déterminée par le modèle surfacique ou le cas échéant par le modèle surfacique modifié.

6. Dispositif selon la revendication 5, **caractérisé en ce que** le système informatique est réalisé pour effectuer la réflexion à la surface de l'outil de formage déterminée par le modèle surfacique ou le cas échéant le modèle surfacique modifié, **en ce que** grâce à un point en 3D (A, B) et un point correspondant (a, b) de la surface de consigne de la pièce, conformément au modèle de CAO (23), une droite (g_{A}, g_{B}) est posée, et un vecteur d'espacement (r_{A}, r_{B}) étant déterminé, lequel pointe à partir du point en 3D (A, B) vers le point correspondant (a, b) de la surface de consigne, le vecteur d'espacement (r_{A}, r_{B}) étant décalé le long de la droite (g_{A}, g_{B}) de manière à ce que son point de base coïncide avec un point d'intersection (Sₐ, S_{b}) de la droite (g_{A}, g_{B}) avec la surface de l'outil de formage (10) conformément au modèle surfacique ou le cas échéant au modèle surfacique déjà modifié préalablement, le vecteur d'espacement (r'_{A}, r'_{B}) décalé pointant vers le point en 3D (a', b') corrigé.
